# EUROPEAN PATENT APPLICATION

(11) **EP 4 353 758 A1**
(43) Date of publication of application: **17.04.2024**
(21) Application number: 22819927.9
(22) Date of filing: 31.03.2022
(51) Int. Cl.: C08F 259/02, C08F 283/01, C08L 23/28, C08L 33/06, C08L 67/08, C09D 123/28, C09D 133/06, C09D 167/08

(54) **RESIN COMPOSITION, COATING MATERIAL, AND COATED ARTICLE**

(30) Priority: 08.06.2021 JP 2021095817
(71) Applicant: DIC Corporation, Tokyo 174-8520 (JP)
(72) Inventor: MIYAGAKI, Atsushi, Ichihara-shi, Chiba 290-8585 (JP); GRAN MARTINEZ, Alejandro, Ichihara-shi, Chiba 290-8585 (JP); VASIC, Goran, 1220 Vienna (AT); THITINAN, Chongthom, Bangpoomai, Samutprakarn 10280 (TH)
(74) Representative: TBK
(86) International application number: PCT/JP2022/016448
(87) International publication number: WO 2022/259739

(57) **Abstract**

There is provided a resin composition containing a chlorinated polyolefin resin (A), an acrylic resin (B), and an alkyd resin (C), in which a content of the chlorinated polyolefin (A) is 1 to 30% by mass, a content of the acrylic resin (B) is 40 to 95% by mass, and a content of the alkyd resin (C) is 2 to 20% by mass in a solid content of the resin composition, and an amount of an alkyl (meth)acrylate in an unsaturated monomer raw material of the acrylic resin (B) is 70 to 100% by mass. Since the resin composition provides a coating film excellent in high adhesion to an untreated olefin substrate, adhesion when used as a multilayer coating film, and steam jet resistance, the resin composition can be suitably used as a coating material for coating various articles such as housings of electronic devices such as mobile phones, smartphones, tablet terminals, personal computers, digital cameras, and game machines; housings of home appliances such as televisions, refrigerators, washing machines, and air conditioners; and interior and exterior materials of various vehicles such as automobiles and railroad vehicles.

## Description

### TECHNICAL FIELD

The present invention relates to a resin composition, a coating material, and a coated article.

### BACKGROUND ART

Conventionally, a polyolefin-modified acrylic resin obtained by reacting an unsaturated monomer in the presence of a polyolefin has been proposed, and it is known that a cured coating film thereof is excellent in adhesion to a substrate, weather resistance, and the like (for example, see PTL 1).

However, a coating film obtained from this polyolefin-modified acrylic resin has problems that adhesion to an untreated olefin substrate, adhesion when used as a multilayer coating film, and steam jet resistance are insufficient.

### CITATION LIST

### PATENT LITERATURE

PTL 1: JP 2001-72724 A

### SUMMARY OF INVENTION

### TECHNICAL PROBLEM

An object of the present invention is to provide a resin composition which can provide a coating film having high adhesion to an untreated olefin substrate, excellent adhesion when used as a multilayer coating film, and excellent steam jet resistance, a coating material, and a coated article coated with the coating material.

### SOLUTION TO PROBLEM

As a result of intensive studies, the present inventors have found that the above-mentioned problems can be solved by using a resin composition containing a chlorinated polyolefin, a specific acrylic resin, and an alkyd resin at a specific composition ratio, and have completed the invention.

That is, the present invention relates to a resin composition containing a chlorinated polyolefin resin (A), an acrylic resin (B), and an alkyd resin (C), in which a content of the chlorinated polyolefin resin (A) is 1 to 30% by mass, a content of the acrylic resin (B) is 40 to 95% by mass, and a content of the alkyd resin (C) is 2 to 20% by mass in a solid content of the resin composition, and an amount of an alkyl (meth)acrylate in an unsaturated monomer raw material of the acrylic resin (B) is 70 to 100% by mass.

### ADVANTAGEOUS EFFECTS OF INVENTION

Since the resin composition of the invention can provide a coating film excellent in high adhesion to an untreated olefin substrate, adhesion when used as a multilayer coating film, and steam jet resistance, the resin composition can be suitably used as a coating material for coating various articles such as housings of electronic devices such as mobile phones, smartphones, tablet terminals, personal computers, digital cameras, and game machines; housings of home appliances such as televisions, refrigerators, washing machines, and air conditioners; and interior and exterior materials of various vehicles such as automobiles and railroad vehicles.

### DESCRIPTION OF EMBODIMENTS

The resin composition of the invention is a resin composition containing a chlorinated polyolefin resin (A), an acrylic resin (B), and an alkyd resin (C), in which a content of the chlorinated polyolefin resin (A) is 1 to 30% by mass, a content of the acrylic resin (B) is 40 to 95% by mass, and a content of the alkyd resin (C) is 2 to 20% by mass in a solid content of the resin composition, and an amount of an alkyl (meth)acrylate in an unsaturated monomer raw material of the acrylic resin (B) is 70 to 100% by mass.

The chlorinated polyolefin resin (A) is obtained by chlorinating a polyolefin resin. Additionally, the chlorinated polyolefin resin (A) may be used alone or in combination of two or more thereof.

Examples of the polyolefin resin include polypropylene, high-density polyethylene, ultra-high-molecular-weight polyethylene, linear low-density polyethylene, low-density polyethylene, ultra-low-density polyethylene, ultra-ultra-low-density polyethylene, polymethylpentene, ethylene-propylene copolymer, propylene-1-butene random copolymer, propylene-ethylene-1-butene random copolymer, copolymer of propylene and α-olefin, propylene-non-conjugated diene copolymer, ethylene-non-conjugated diene copolymer, ethylene-propylene-non-conjugated diene copolymer, polybutene, ethylene-vinyl acetate copolymer, ethylene-vinyltrimethoxysilane copolymer, ethylene-methyl acrylate copolymer, ethylene-ethyl acrylate copolymer, ethylene-methyl methacrylate copolymer, styrenebutadiene block copolymer, and hydrogenated products thereof, and a copolymer of propylene and α-olefin is preferable because adhesion to an untreated olefin substrate, adhesion when used as a multilayer coating film, and steam jet resistance are further improved.

The chlorine content of the chlorinated polyolefin resin (A) is preferably 15 to 40% by mass because the compatibility and the adhesiveness are further improved.

The weight average molecular weight of the chlorinated polyolefin resin (A) is preferably 5,000 to 200,000.

The acrylic resin (B) is obtained by polymerization of an unsaturated monomer raw material. The amount of the alkyl (meth)acrylate in the unsaturated monomer raw material is 70 to 100% by mass, and is preferably 90 to 100% by mass, and more preferably 95 to 100% by mass, because adhesion to an untreated olefin substrate, adhesion when used as a multilayer coating film, and steam jet resistance are further improved.

Note that, in the invention, "(meth)acrylate" refers to either or both of methacrylate and acrylate, "(meth)acrylic acid" refers to either or both of methacrylic acid and acrylic acid, and "(meth)acryloyl group" refers to either or both of methacryloyl group and acryloyl group.

The alkyl (meth)acrylate includes cycloalkyl (meth)acrylate, and examples thereof include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, tridecyl (meth)acrylate, cetyl (meth)acrylate, cyclohexyl (meth)acrylate, 4-tert-butylcyclohexyl (meth)acrylate, isobornyl (meth)acrylate, and dicyclopentanyl (meth)acrylate. In addition, these alkyl (meth)acrylates may be used alone or in combination of two or more thereof, but it is preferable that the unsaturated monomer raw material contains 40 to 100% by mass of an alicyclic (meth)acrylate such as cyclohexyl (meth)acrylate, 4-tert-butylcyclohexyl (meth)acrylate, isobornyl (meth)acrylate, or dicyclopentanyl (meth)acrylate, because compatibility with the chlorinated polyolefin and adhesion to the untreated olefin substrate are further improved.

Examples of unsaturated monomer raw materials other than the alkyl (meth)acrylate include unsaturated monomers having a hydroxy group, such as 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, 1,4-cyclohexanedimethanol mono(meth)acrylate, glycerol mono(meth)acrylate, polyoxyethylene mono(meth)acrylate, polyoxypropylene mono(meth)acrylate, polyoxybutylene mono(meth)acrylate, 2-hydroxy-3-phenoxypropyl (meth)acrylate, 2-(meth)acryloyloxyethyl-2-hydroxyethyl phthalate, and polycaprolactone-modified hydroxyethyl mono(meth)acrylate; unsaturated monocarboxylic acids, such as (meth)acrylic acid, crotonic acid, β-carboxyethyl (meth)acrylate, ω-carboxy-polycaprolactone mono(meth)acrylate, 2-(meth)acryloyloxyethyl succinate, and 2-(meth)acryloyloxyethyl hexahydrophthalic acid; unsaturated monomers having an acid group, such as an unsaturated dicarboxylic acid including maleic acid, fumaric acid, itaconic acid, or the like, or a half ester of any of these unsaturated dicarboxylic acids; acrylamide, N,N-dimethyl (meth)acrylamide, (meth)acrylonitrile, 3-(meth)acryloyloxypropyl trimethoxysilane, N,N-dimethylaminoethyl (meth)acrylate, 2-(meth)acryloyloxyethyl acid phosphate, glycidyl (meth)acrylate, vinyl acetate, styrene, α-methyl styrene, p-methyl styrene, and p-methoxy styrene. In addition, these other unsaturated monomer raw materials may be used alone or in combination of two or more thereof.

Further, the glass transition temperature (hereinafter, abbreviated as "design Tg") of the acrylic resin (B) calculated by the FOX equation is preferably 50°C to 135°C, and more preferably 100°C to 135°C, because the steam jet resistance is further improved.

In the invention, the glass transition temperature calculated by the FOX equation is determined by calculation according to the FOX equation: 1/Tg = W1/Tg1 + W2/Tg2 + ... (Tg: glass transition temperature to be determined, W1: weight fraction of component 1, Tg1: glass transition temperature of homopolymer of component 1). As the value of the glass transition temperature of the homopolymer of each component, a value described in Polymer Handbook (4th Edition) by J. Brandrup, E. H. Imergut, and E. A. Grulke (Wiley Interscience) is used.

Further, the weight average molecular weight of the acrylic resin (B) is preferably 10,000 to 400,000, and more preferably 20,000 to 200,000.

Note that, in the invention, the average molecular weight is a value converted into polystyrene based on measurement by gel permeation chromatography (hereinafter, abbreviated as "GPC").

The oil length of the alkyd resin (C) in terms of triglyceride is preferably 20 to 60% by mass, because compatibility with the polyolefin and pigment dispersibility are further improved.

The alkyd resin (C) preferably has a hydroxyl value of 50 to 200 mgKOH/g or less because the compatibility with the polyolefin is further improved.

The alkyd resin (C) preferably has an acid value of 20 to 50 mgKOH/g because the storage stability is further improved.

The number average molecular weight of the alkyd resin (C) is preferably 1,000 to 5,000 because the compatibility with the polyolefin and adhesiveness are further improved.

The content of the chlorinated polyolefin resin (A) in the solid content of the resin composition of the invention is 1 to 30% by mass, but from the viewpoint of further improving pigment dispersibility and weather resistance, the content is preferably 1 to 20% by mass, and more preferably 3 to 12% by mass.

The content of the acrylic resin (B) in the solid content of the resin composition of the invention is 40 to 95% by mass, but from the viewpoint of further improving weather resistance and adhesion between multilayer films, the content is preferably 50 to 90% by mass, and more preferably 60 to 80% by mass..

The content of the alkyd resin (C) in the solid content of the resin composition of the invention is 2 to 30% by mass, but is preferably 10 to 20% by mass from the viewpoint of further improving compatibility with the polyolefin and pigment dispersibility.

As a method for obtaining the resin composition of the invention, a method of radically polymerizing an unsaturated monomer raw material of the acrylic resin (B) in the presence of the polyolefin resin (A), the alkyd resin (C), and a solvent is simple and thus preferable.

The radical polymerization method is a method in which each monomer as a raw material is dissolved in a solvent, and a polymerization reaction is carried out in the presence of a polymerization initiator. Examples of the solvent which can be used in this case include aromatic hydrocarbon compounds such as toluene and xylene; alicyclic hydrocarbon compounds such as cyclohexane, methylcyclohexane, and ethylcyclohexane; ketone compounds such as acetone, methyl ethyl ketone, methyl isobutyl ketone, and cyclohexanone; ester compounds such as ethyl acetate, n-butyl acetate, isobutyl acetate, and propylene glycol monomethyl ether acetate; alcohol compounds such as n-butanol, isopropyl alcohol, and cyclohexanol; glycol compounds such as ethylene glycol monobutyl ether and propylene glycol monomethyl ether; and aliphatic hydrocarbon compounds such as heptane, hexane, octane, and mineral terpene.

Examples of the polymerization initiator include organic peroxides such as; ketone peroxide compounds such as cyclohexanone peroxide, 3,3,5-trimethylcyclohexanone peroxide, and methylcyclohexanone peroxide; peroxyketal compounds such as 1,1-bis(tert-butylperoxy)-3,3,5-trimethylcyclohexane, 1,1-bis(tert-butylperoxy)cyclohexane, n-butyl-4,4-bis(tert-butylperoxy)valerate, 2,2-bis(4,4-ditert-butylperoxycyclohexyl)propane, 2,2-bis(4,4-ditert-amylperoxycyclohexyl)propane, 2,2-bis(4,4-ditert-hexylperoxycyclohexyl)propane, 2,2-bis(4,4-ditert-octylperoxycyclohexyl)propane, and 2,2-bis(4,4-dicumylperoxycyclohexyl)propane; hydroperoxide compounds such as cumene hydroperoxide and 2,5-dimethylhexane-2,5-dihydroperoxide; dialkylperoxide compounds such as 1,3-bis(tert-butylperoxy-m-isopropyl)benzene, 2,5-dimethyl-2,5-di(tert-butylperoxy)hexane, diisopropylbenzene peroxide, tert-butylcumyl peroxide, and di-tert-butyl peroxide; diacylperoxide compounds such as decanoyl peroxide, lauroyl peroxide, benzoyl peroxide and 2,4-dichlorobenzoyl peroxide; peroxycarbonate compounds such as bis(tert-butylcyclohexyl)peroxydicarbonate; peroxyester compounds such as tert-butylperoxy-2-ethylhexanoate, tert-butylperoxybenzoate, and 2,5-dimethyl-2,5-di(benzoylperoxy)hexane; and azo compounds such as 2,2'-azobisisobutyronitrile, 2,2'-azobis(2-methyl)butyronitrile, and 1,1'-azobis(cyclohexane-1-carbonitrile).

The resin composition of the invention can be suitably used for a coating material, and can be more suitably used for a primer coating material because the obtained coating film has high adhesion to a plastic substrate and a top coating film, and a coating film excellent in steam jet resistance can be obtained.

The coating material of the invention contains the resin composition of the invention, but as other components, additives such as a solvent, an anti-foaming agent, a viscosity modifier, a light-resistant stabilizer, a weather-resistant stabilizer, a heat-resistant stabilizer, an ultraviolet absorber, an antioxidant, a leveling agent, and a pigment dispersant can be used. Further, pigments such as titanium oxide, calcium carbonate, aluminum powder, copper powder, mica powder, iron oxide, carbon black, phthalocyanine blue, toluidine red, perylene, quinacridone, and benzidine yellow can also be used.

The coating material of the invention can be used as a one-component type coating material (hereinafter, sometimes abbreviated as "1K") or as a two-component type coating material containing a curing agent (hereinafter, sometimes abbreviated as "2K").

As the curing agent, a curing agent capable of reacting with a hydroxy group, such as a polyisocyanate or an amino resin, is suitably used.

Examples of the polyisocyanate include aliphatic diisocyanates such as 1,4-tetramethylene diisocyanate, ethyl (2,6-diisocyanate)hexanoate, 1,6-hexamethylene diisocyanate, 1,12-dodecamethylene diisocyanate, and 2,2,4- or 2,4,4-trimethylhexamethylene diisocyanate; aliphatic triisocyanates such as 1,3,6-hexamethylene triisocyanate, 1,8-diisocyanate-4-isocyanate methyloctane, and 2-isocyanate ethyl (2,6-diisocyanate)hexanoate; aliphatic diisocyanates such as 1,3-bis(isocyanate methylcyclohexane), 1,4-bis(isocyanate methylcyclohexane), 1,3-diisocyanate cyclohexane, 1,4-diisocyanate cyclohexane, 3,5,5-trimethyl (3-isocyanate methyl)cyclohexyl isocyanate, dicyclohexylmethane-4,4'-diisocyanate, 2,5-diisocyanate methyl norbornane, and 2,6-diisocyanate methyl norbornane; aliphatic triisocyanates such as 2,5-diisocyanate methyl-2-isocynate propyl norbornane and 2,6-diisocyanate methyl-2-isocynate propyl norbornane; aralkylene diisocyanates such as m-xylylene diisocyanate and α,α,α',α'-tetramethyl-m-xylylene diisocyanate; aromatic diisocyanates such as m- or p-phenylene diisocyanate, tolylene-2,4-diisocyanate, tolylene-2,6-diisocyanate, diphenylmethane-4,4'-diisocyanate, naphthalene-1,5-diisocyanate, diphenyl-4,4'-diisocyanate, 4,4'-diisocyanate-3,3'-dimethyldiphenyl, 3-methyl-diphenylmethane-4,4'-diisocyanate, and diphenylether-4,4'-diisocyanate; aromatic triisocyanates such as triphenylmethane triisocyanate and tris(isocyanatophenyl) thiophosphate; polyisocyanates having a uretdione structure obtained by cyclodimerization of isocyanate groups of the above diisocyanates or triisocyanates; polyisocyanates having an isocyanurate structure obtained by cyclotrimerization of isocyanate groups of the above diisocyanates or triisocyanates; polyisocyanates having a biuret structure obtained by reacting the above diisocyanates or triisocyanates with water; polyisocyanates having an oxadiazinetrione structure obtained by reacting the above diisocyanates or triisocyanates with carbon dioxide; and polyisocyanates having an allophanate structure. Among these, a polyisocyanate having an isocyanurate structure obtained by cyclotrimerizing hexamethylene diisocyanate or the like is preferable because it can form a dense crosslinked coating film and further improve the solvent resistance of the cured coating film. Furthermore, these polyisocyanates may be used alone or in combination of two or more thereof.

Examples of the amino resin include alkyl-etherified melamine resin, alkyl-etherified acetoguanamine resin, alkyl-etherified benzoguanamine resin, alkyl-etherified urea resin, and alkyl-etherified spiroguanamine resin.

Among these, alkyl-etherified melamine resins are preferable, and those having 1 to 4 carbon atoms in the alkyl moiety are more preferable. Specific examples thereof include n-butyl-etherified melamine resin, i-butyl-etherified melamine resin, and methyl-etherified melamine resin. These amino resins (B) may be used alone or in combination of two or more thereof.

The blending amount of the curing agent is such an amount that the equivalent ratio of the group capable of reacting with a hydroxy group in the curing agent to the hydroxy group in the resin is preferably in a range of 0.5 to 2, and more preferably in a range of 0.8 to 1.5.

The substrate on which the coating material of the invention is coated is not particularly limited, but a plastic substrate is preferable, and since the coating material has excellent adhesiveness even to a hardly adhesive substrate, the coating material of the invention is particularly useful in a substrate having a surface free energy of 30 mN/m or less, such as a polyolefin substrate made of a polyolefin obtained by (co)polymerizing one or more olefins having 2 to 10 carbon atoms, such as ethylene, propylene, butylene, and hexene.

The coating material containing the resin composition of the invention can impart a design or function to a plastic substrate as a coated article coated as a monocoat for plastic, a clear coating material, or an enamel coating material containing pigments. In addition, a two layer coated article coated with a topcoat using the coating material containing the resin composition of the invention as a primer, and a three layer coated article coated with a base coat and a topcoat on the primer coating film containing the resin composition of the invention can be formed as a coated article having further aesthetics and function.

The coating material containing the resin composition of the invention is excellent in dispersibility of a general-purpose pigment and a conductive pigment. The conductive pigment is not particularly limited as long as it can impart conductivity to the formed coating film, and any shape such as a particle shape, a flake shape, and a fiber (including whiskers) shape can be used. Specific examples include conductive carbon such as conductive carbon black, carbon nanotubes, carbon nanofibers, and carbon microcoils; metal powders such as silver, nickel, copper, graphite, and aluminum; furthermore, tin oxide doped with antimony, tin oxide doped with phosphorus, acicular titanium oxide whose surface is coated with tin oxide or antimony, and pigments coated with conductive metal oxides such as antimony oxide, each of which can be used alone or in combination of two or more. Among these, conductive carbon can be preferably used. Pigments other than the above-mentioned conductive pigments, for example, coloring pigments such as titanium white, red iron oxide, aluminum paste, azo-based and phthalocyanine-based pigments, and extender pigments such as talc, silica, calcium carbonate, barium sulfate, and zinc oxide can be contained, and these pigments can be used alone or in combination of two or more.

As the coating material to be overcoated, a lacquer coating material using no curing agent or a two-component type polyol/isocyanate curing agent coating material using isocyanate or the like as a curing agent may be used.

In the case of three layer coating, an organic solvent or an aqueous base coat coating material obtained by appropriately adding a resin, a coloring pigment/brilliant pigment, an extender pigment, a crosslinking agent, a curing catalyst, a viscosity improver, an ultraviolet absorber, a light stabilizer, an anti-foaming agent, a rust inhibitor, a plasticizer, a surface conditioner, an anti-settling agent and an organic solvent to a primer coating material containing the resin composition of the invention is usually used. Examples of the resin include a polyester resin, an acrylic resin, and an alkyd resin, and when physical resistance and chemical resistance are important, a two-component type in which a resin containing a hydroxy group is selected and cured with an isocyanate or the like can be used, and when adhesiveness is important, a one-component type in which a curing agent is not blended can be used.

As the base coat, a solvent type clear coat is usually coated. As the clear coat coating material, for example, those containing, as resin components, a base resin such as an acrylic resin, a polyester resin, an alkyd resin, a urethane resin, an epoxy resin, or a fluorine resin, which has a crosslinkable functional group such as a hydroxy group, a carboxy group, an epoxy group, or a silanol group, and a crosslinking agent such as a melamine resin, a urea resin, a polyisocyanate compound which may be blocked, a carboxy group-containing compound or resin, or an epoxy group-containing compound or resin, can be used. Among these, it is particularly preferable to use one containing a hydroxy group-containing acrylic resin and a polyisocyanate compound which may be blocked as resin components.

Examples of the coating method of the coating material of the invention include methods such as spraying, applicator, bar coater, gravure coater, roll coater, comma coater, knife coater, air knife coater, curtain coater, kiss coater, shower coater, wheeler coater, spin coater, dipping, and screen printing. In addition, examples of the method for forming a coating film after coating include a method of drying in a range of room temperature to 120°C.

Since the coating material of the invention has high adhesion to a plastic substrate, it can be suitably used as a coating material for coating various plastic molded articles, and examples of plastic molded articles to which the coating material of the invention can be coated include housings of electronic devices such as mobile phones, smartphones, tablet terminals, personal computers, digital cameras, and game machines; housings of home appliances such as televisions, refrigerators, washing machines, and air conditioners; and interior materials of various vehicles such as automobiles and railway vehicles.

### EXAMPLES

Hereinafter, the invention will be described in more detail with reference to specific Examples. Note that the average molecular weight was measured under the following GPC measurement conditions.

### [GPC Measurement Conditions]

Measuring apparatus: high-speed GPC apparatus ("HLC-8220GPC" manufactured by Tosoh Corporation)
Columns: The following columns manufactured by Tosoh Corporation were connected in series and used.
"TSKgel G5000" (7.8 mmI.D. × 30 cm) × 1
"TSKgel G4000" (7.8 mmI.D. × 30 cm) × 1
"TSKgel G3000" (7.8 mmI.D. × 30 cm) × 1
"TSKgel G2000" (7.8 mmI.D. × 30 cm) × 1
Detector: RI (differential refractometer)
Column temperature: 40°C
Eluent: Tetrahydrofuran (THF)
Flow rate: 1.0 mL/min
Injection volume: 100 µL (tetrahydrofuran solution with a sample concentration of 4 mg/mL)
Standard sample: A calibration curve was prepared using the following monodisperse polystyrene.

### (Monodisperse Polystyrene)

"TSKgel Standard Polystyrene A-500" manufactured by Tosoh Corporation
"TSKgel Standard Polystyrene A-1000" manufactured by Tosoh Corporation
"TSKgel Standard Polystyrene A-2500" manufactured by Tosoh Corporation
"TSKgel Standard Polystyrene A-5000" manufactured by Tosoh Corporation
"TSKgel Standard Polystyrene F-1" manufactured by Tosoh Corporation
"TSKgel Standard Polystyrene F-2" manufactured by Tosoh Corporation
"TSKgel Standard Polystyrene F-4" manufactured by Tosoh Corporation
"TSKgel Standard Polystyrene F-10" manufactured by Tosoh Corporation
"TSKgel Standard Polystyrene F-20" manufactured by Tosoh Corporation
"TSKgel Standard Polystyrene F-40" manufactured by Tosoh Corporation
"TSKgel Standard Polystyrene F-80" manufactured by Tosoh Corporation
"TSKgel Standard Polystyrene F-128" manufactured by Tosoh Corporation
"TSKgel Standard Polystyrene F-288" manufactured by Tosoh Corporation
"TSKgel Standard Polystyrene F-550" manufactured by Tosoh Corporation

### (Synthesis Example 1: Production of Alkyd Resin)

Into a four-necked flask equipped with a stirrer, a thermometer, and a nitrogen inlet tube, 52 parts by mass of soybean oil, 6 parts by mass of pentaerythritol, and 0.01 parts by mass of lithium naphthenate were charged, and transesterification reaction was performed at 230°C for 2 hours to obtain a transesterified product. Subsequently, 18 parts by mass of glycerol, 21 parts by mass of phthalic anhydride, and 21 parts by mass of benzoic acid were charged, esterified at 220°C to a solid content acid value of 7.0 mgKOH/g, cooled to 120°C, and then diluted with n-butyl acetate to a nonvolatile content of 70% by mass, thereby obtaining an alkyd resin composition having a solid content hydroxyl value of 150 mgKOH/g and a number average molecular weight of 2,000.

### (Synthesis Example 2: Production of Polyester Resin)

Into a four-neked flask equipped with a stirrer, a thermometer, and a nitrogen inlet tube, 17 parts by mass of isophthalic acid, 14 parts by mass of hexahydrophthalic acid, 5.7 parts by mass of adipic acid, 8 parts by mass of neopentyl glycol, and 18 parts by mass of 1,6-hexanediol were charged, and the mixture was esterified at 220°C to a solid content acid value of 15 mgKOH/g, cooled at 140°C, and then diluted with xylene to a nonvolatile content of 60% by mass, thereby obtaining a polyester resin composition having a solid content hydroxyl value of 70 mgKOH/g and a number average molecular weight of 3,800.

### (Example 1: Production and Evaluation of Resin Composition (1))

Into a four-necked flask equipped with a stirrer, a thermometer, a reflux cooling device, and a nitrogen inlet pipe, 100 parts by mass of n-butyl acetate, 10 parts by mass of a chlorinated polyolefin resin, and 25.7 parts by mass of the alkyd resin composition obtained above (18 parts by mass as the solid content of the alkyd resin) were charged, and the mixture was heated to 90°C while being substituted with nitrogen. Then, 72 parts by mass of an unsaturated group monomer mixture described in Table 1 and 1.5 parts by mass of t-butylperoxy-2-ethylhexanoate were fed thereto over 4 hours, and after 1 hour from the completion of the feeding, 0.4 parts by mass of t-butylperoxy-2-ethylhexanoate was added, and the mixture was further reacted for 5 hours. Thereafter, the mixture was diluted with n-butyl acetate so as to have a nonvolatile content of 50% by mass, thereby preparing a resin composition (1).

### [Preparation of 1K Primer Coating Material]

After 100 parts by mass of the resin composition obtained above and 5 parts by mass of conductive carbon black (Ketjenblack EC-300J) were blended, a primer coating material was obtained in which the spray viscosity was adjusted to 12 seconds (IWATA Cup/25°C) with a thinner (propylene glycol monomethyl ether acetate/butyl acetate (mass ratio) = 1/1).

### [Preparation of 2K Primer Coating Material]

The resin composition obtained above, conductive carbon black (Ketjenblack EC-300J), and polyisocyanate (Desmodur N-3300) were blended as shown in Table 5, and then a primer coating material was obtained in which the spray viscosity was adjusted to 12 seconds (IWATA Cup/25°C) with a thinner (propylene glycol monomethyl ether acetate/butyl acetate (mass ratio) = 1/1).

### [Preparation of 1K Metallic Base Coat]

35 parts by mass of ACRYDIC A-134-IM (manufactured by Siam Chemical Industry Co., Ltd., solvent-based acrylic resin), 29.2 parts by mass of BECKOLITE AL-4298-60 (manufactured by Siam Chemical Industry Co., Ltd., solvent-based polyester resin), 7160N (manufactured by Toyo Aluminum K.K., aluminum paste), 75 parts by mass of a 20% butyl acetate solution of CAB381-0.5 (manufactured by Eastman, cellulose acetate butyrate), and 0.5 parts by mass of BYK-337 (manufactured by BYK, leveling agent) were mixed well, and the mixture was diluted to a spray viscosity at IWATA Cup 12 seconds (25°C) with a thinner (xylene/butyl acetate/Solvesso 100/propylene glycol methyl ether acetate (mass ratio) = 50/20/15/15) to obtain a base coat.

### [Preparation of 2K Metallic Base Coat]

17.04 parts by mass of ACRYDIC AC-333 (manufactured by Siam Chemical Industry Co., Ltd., solvent-based acrylic polyol resin), 18.26 parts by mass of a 20% butyl acetate solution of CAB581-0.5 (manufactured by Eastman, cellulose acetate butyrate), 4.70 parts by mass of 7160N (manufactured by Toyo Aluminum K.K., aluminum paste), 0.7 parts by mass of BYK-337 (manufactured by BYK, leveling agent), 0.4 parts by mass of CERAFAK106 (manufactured by BYK, dispersing agent), 0.1 parts by mass of dibutyltin dilaurate diluted to 1% with butyl acetate, and 2.1 parts by mass of Desmodur N-3300 (manufactured by Covestro AG, polyisocyanate, 21.8% isocyanate) were mixed well, and the mixture was diluted to a spray viscosity at IWATA Cup 12 seconds (25°C) with a thinner (xylene/butyl acetate/Solvesso 100/propylene glycol methyl ether acetate (mass ratio) = 50/20/15/15) to obtain a base coat.

### [Preparation of 2K Top Clear Coat]

100 parts by mass of ACRYDIC A-3601 (manufactured by Siam Chemical Industry Co., Ltd., acrylic resin, solid content hydroxyl value: 160 mgKOH/g, nonvolatile content: 70%) was diluted with a thinner (xylene/butyl acetate/Solvesso 100/propylene glycol methyl ether acetate (mass ratio) = 50/20/15/15), 38 parts by mass of Desmodur N-3300 (manufactured by Covestro AG, polyisocyanate, 21.8% isocyanate) as a curing agent was mixed, and the mixture was diluted with the same thinner so as to have a spray viscosity at IWATA Cup 12 seconds (25°C), thereby obtaining a top clear coat.

### [Untreated PP Plate (Polypropylene Substrate)]

Surface energy: 25 to 30 mN/m

### [Flame-Treated PP Plate (Flame-Treated Polypropylene Substrate)]

The surface of the polypropylene substrate was broiled with a burner, and the surface energy was adjusted to 40 to 52 mN/m.

### [Preparation of Cured Coating Film for Evaluation]

The primer coating material was spray coated on the substrate to a dry film thickness of 10 µm, and after standing at room temperature for 10 minutes, the metallic base coat was spray coated to a dry film thickness of 12 µm. After standing at room temperature for 10 minutes, the top clear coat was spray coated to a dry film thickness of 35 µm. After standing at room temperature for 10 minutes, the coating was dried in a dryer set at 80°C for 30 minutes to obtain a coating film for evaluation (test plate).

### [Evaluation of Adhesiveness]

On the cured coating film for evaluation obtained above, cuts having a width of 1 mm were made with a cutter, and the number of squares was set to 100. Next, an operation of attaching a cellophane tape so as to cover all the squares and quickly peeling off the tape was performed four times, and the adhesiveness was evaluated from the peeled state of the coating film according to the following criteria.
10: No squares of lattice were peeled off.
9: The peeled portion was less than 2.5% of the whole.
8: The peeled portion was 2.5% or more and less than 5% of the whole.
7: The peeled portion was 5% or more and less than 10% of the whole.
6: The peeled portion was 10% or more and less than 15% of the whole.
5: The peeled portion was 15% or more and less than 25% of the whole.
4: The peeled portion was 25% or more and less than 35% of the whole.
3: The peeled portion was 35% or more and less than 45% of the whole.
2: The peeled portion was 45% or more and less than 65% of the whole.
1: The peeled portion was 65% or more and less than 85% of the whole.
0: The peeled portion was 85% or more of the whole.

### [Evaluation of Steam Jet Resistance]

Water was sprayed at a water temperature of 60°C, a pressure of 65 Bar and a distance of 10 cm for 60 seconds at an angle of 90° with respect to the test plate. The coating film for evaluation was cut into a cross so that the intersection angle was 60°, and the steam jet resistance was evaluated from the peeled state after the test according to the following criteria.
10: No squares of lattice were peeled off.
9: The peeled portion was less than 2.5% of the whole.
8: The peeled portion was 2.5% or more and less than 5% of the whole.
7: The peeled portion was 5% or more and less than 10% of the whole.
6: The peeled portion was 10% or more and less than 15% of the whole.
5: The peeled portion was 15% or more and less than 25% of the whole.
4: The peeled portion was 25% or more and less than 35% of the whole.
3: The peeled portion was 35% or more and less than 45% of the whole.
2: The peeled portion was 45% or more and less than 65% of the whole.
1: The peeled portion was 65% or more and less than 85% of the whole.
0: The peeled portion was 85% or more of the whole.

### (Examples 2 to 10: Production and Evaluation of Resin Compositions (2) to (10))

Resin compositions (2) to (10) each having a nonvolatile content of 50% by mass were obtained in the same manner as in Example 1 except that the compositions of the chlorinated polyolefin resin, the alkyd resin, and the acrylic resin (unsaturated monomer mixture) were changed as shown in Tables 1 and 2, and then coating materials were prepared and subjected to various evaluations.

### (Comparative Examples 1 to 8: Production and Evaluation of Resin Compositions (R1) to (R8))

Resin compositions (2) to (10) each having a nonvolatile content of 50% by mass were obtained in the same manner as in Example 1 except that the compositions of the chlorinated polyolefin, the alkyd resin, and the acrylic resin (unsaturated monomer mixture) were changed as shown in Tables 1 and 2, and then coating materials were prepared and subjected to various evaluations.

The compositions of the resin compositions obtained above are shown in Tables 1 to 4.

**[Table 1]**

| Table 1 | | | Example | | | | | |
|---|---|---|---|---|---|---|---|---|
| | | | 1 | 2 | 3 | 4 | 5 | 6 |
| Resin composition | | | (1) | (2) | (3) | (4) | (5) | (6) |
| Composition (parts by mass) | Chlorinated polyolefin resin (A) | DX-530P | 10 | | | | | |
| | | DX-523P | | 3 | 20 | 30 | | |
| | | 14-LLB-P | | | | | 10 | |
| | | F-7P | | | | | | 10 |
| | Alkyd resin (C) | | 10 | 19.4 | 16 | 14 | 18 | 18 |
| | Acrylic resin (B) | | 72 | 77.6 | 64 | 56 | 72 | 72 |
| | Composition of unsaturated monomer of acrylic resin (B) (% by mass) | MMA | 37.5 | 37.5 | 37.5 | 37.5 | 37.5 | 37.5 |
| | | CHMA | 41.25 | 41.25 | 41.25 | 41.25 | 41.25 | 41.25 |
| | | IBOMA | 21.25 | 21.25 | 21.25 | 21.25 | 21.25 | 21.25 |
| | | % by mass of alkyl (meth)acrylate | 100 | 100 | 100 | 100 | 100 | 100 |
| | Hydroxyl value of acrylic resin (B) (mgKOH/g) | | 0 | 0 | 0 | 0 | 0 | 0 |
| Hydroxyl value of resin composition (mgKOH/g) | | | 27 | 29 | 24 | 21 | 27 | 27 |

**[Table 2]**

| Table 2 | | | Example | | | | | |
|---|---|---|---|---|---|---|---|---|
| | | | 7 | 8 | 9 | 10 | 11 | 12 |
| Resin composition | | | (7) | (8) | (9) | (10) | (11) | (12) |
| Composition (parts by mass) | Chlorinated polyolefin resin (A) | F-7P | 10 | 10 | 10 | 10 | 10 | 10 |
| | Alkyd resin (C) | | 10 | 2 | 30 | 18 | 18 | 18 |
| | Acrylic resin (B) | | 80 | 88 | 60 | 72 | 72 | 72 |
| | Composition of unsaturated monomer of acrylic resin (B) (% by mass) | MMA | 37.5 | 37.5 | 37.5 | 30.6 | 35.2 | 37.5 |
| | | CHMA | 41.25 | 41.25 | 41.25 | 41.25 | 41.25 | 42.5 |
| | | IBOMA | 21.25 | 21.25 | 21.25 | 21.25 | 21.25 | |
| | | HEMA | | | | 6.9 | 2.3 | |
| | | % by mass of alkyl (meth)acrylate | 100 | 100 | 100 | 93.1 | 97.7 | 100 |
| | Hydroxyl value of acrylic resin (B) (mgKOH/g) | | 0 | 0 | 0 | 30 | 10 | 0 |
| Hydroxyl value of resin composition (mgKOH/g) | | | 15 | 3 | 46 | 49 | 34 | 27 |

**[Table 3]**

| Table 3 | | | Comparative Example | | | |
|---|---|---|---|---|---|---|
| | | | 1 | 2 | 3 | 4 |
| Resin composition | | | (R1) | (R2) | (R3) | (R4) |
| Composition (parts by mass) | Chlorinated polyolefin resin (A) | 14-LLB-P | 10 | 50 | 15 | 38.8 |
| | Alkyd resin (C) | | | | 35 | 38.8 |
| | Acrylic resin (B) | | 90 | 50 | 50 | 22.4 |
| | Composition of unsaturated monomer of acrylic resin (B) (% by mass) | MMA | 66.6 | 60.6 | | 12.5 |
| | | n-BA | | | 22 | |
| | | EA | 16 | 16 | | |
| | | CHMA | | | 66 | 75 |
| | | St | 10 | 14 | | |
| | | HEMA | 7 | 7 | 12 | 10 |
| | | MAA | 0.4 | 0.4 | | |
| | | AA | | | | 2.5 |
| | | Man | | 2 | | |
| | | % by mass of alkyl (meth)acrylate | 82.6 | 76.6 | 88 | 87.5 |
| | Hydroxyl value of acrylic resin (B) (mgKOH/g) | | 30 | 30 | 52 | 43 |
| Hydroxyl value of resin composition (mgKOH/g) | | | 15 | 3 | 46 | 49 |

**[Table 4]**

| Table 4 | | | Comparative Example | | |
|---|---|---|---|---|---|
| | | | 5 | 6 | 7 |
| Resin composition | | | (R5) | (R6) | (R7) |
| Composition (parts by mass) | Chlorinated polyolefin resin (A) | DX-523P | | 40 | |
| | | F-7P | | | 10 |
| | Alkyd resin (C) | | 20 | 12 | 18 |
| | Acrylic resin (B) | | 80 | 48 | 72 |
| | Composition of unsaturated monomer of acrylic resin (B) (% by mass) | MMA | 37.5 | 37.5 | |
| | | CHMA | 41.25 | 41.25 | 41.25 |
| | | IBOMA | 21.25 | 21.25 | 21.25 |
| | | St | | | 37.5 |
| | | % by mass of alkyl (meth)acrylate | 100 | 100 | 62.5 |
| | Hydroxyl value of acrylic resin (B) (mgKOH/g) | | 0 | 0 | 0 |
| Hydroxyl value of resin composition (mgKOH/g) | | | 15 | 3 | 49 |

The abbreviations in the tables are as follows.
St: styrene
MMA: methyl methacrylate
n-BA:n-butyl acrylate
EA: ethyl acrylate
CHMA: cyclohexyl methacrylate
IBOMA: isobornyl methacrylate
HEMA:2-hydroxyethyl methacrylate
MAA: methacrylic acid
AA: acrylic acid
Man: maleic anhydride
DX-530P: chlorinated polyolefin manufactured by Toyobo Co., Ltd.
DX-523P: chlorinated polyolefin manufactured by Toyobo Co., Ltd.
14-LLB-P: chlorinated polyolefin manufactured by Toyobo Co., Ltd.
F-7P: chlorinated polyolefin manufactured by Toyobo Co., Ltd.

**[Table 5]**

| Table 5 | | Example | | | | | | |
|---|---|---|---|---|---|---|---|---|
| | | 1 | 2 | 3 | 4 | 5 | 6 | |
| Blend of 2K primer coating material (parts by mass) | Resin composition | 100 | 100 | 100 | 100 | 100 | 100 | |
| | Conductive carbon black | 5.8 | 5.8 | 5.7 | 5.6 | 5.8 | 5.8 | |
| | Polyisocyanate | 9.4 | 10.1 | 8.4 | 7.3 | 9.4 | 9.4 | |
| | | Example | | | | | | |
| | | 7 | 8 | 9 | 10 | 11 | 12 | |
| | Resin composition | 100 | 100 | 100 | 100 | 100 | 100 | |
| | Conductive carbon black | 5.5 | 5.3 | 6.1 | 6.1 | 5.9 | 5.8 | |
| | Polyisocyanate | 5.2 | 1.0 | 15.7 | 16.7 | 11.8 | 9.4 | |
| | | Comparative Example | | | | | | |
| | | 1 | 2 | 3 | 4 | 5 | 6 | 7 |
| | Resin composition | 100 | 100 | 100 | 100 | 100 | 100 | 100 |
| | Conductive carbon black | 5.8 | 5.5 | 6.2 | 5.9 | 5.8 | 5.6 | 5.8 |
| | Polyisocyanate | 9.3 | 5.2 | 17.3 | 12.6 | 10.4 | 6.3 | 9.4 |

The evaluation results of the primer coating materials obtained above are shown in Tables 6 to 9.

**[Table 6]**

| Table 6 | | | | | | Example | | | | | |
|---|---|---|---|---|---|---|---|---|---|---|---|
| | | Substrate | Primer | Metallic base coat | Top clear coat | 1 | 2 | 3 | 4 | 5 | 6 |
| Evaluation results | Adhesiveness | Untreated PP plate | 1K | 1K | 2K | 10 | 10 | 10 | 8 | 8 | 10 |
| | | Untreated PP plate | 1K | 1K | 2K | 10 | 10 | 8 | 8 | 6 | 8 |
| | | Flame-treated PP plate | 1K | 1K | 2K | 10 | 10 | 10 | 10 | 8 | 10 |
| | | Untreated PP plate | 1K | 2K | 2K | 8 | 8 | 6 | 6 | 5 | 8 |
| | | Untreated PP plate | 2K | 1K | 2K | 10 | 8 | 8 | 8 | 6 | 8 |
| | Steam jet resistance | Untreated PP plate | 1K | 1K | 2K | 8 | 8 | 6 | 6 | 6 | 6 |
| | | Untreated PP plate | 1K | 1K | 2K | 10 | 8 | 6 | 5 | 6 | 8 |
| | | Flame-treated PP plate | 1K | 1K | 2K | 10 | 10 | 10 | 10 | 8 | 10 |
| | | Untreated PP plate | 1K | 2K | 2K | 6 | 6 | 5 | 4 | 5 | 5 |
| | | Untreated PP plate | 2K | 1K | 2K | 6 | 6 | 6 | 6 | 6 | 6 |

**[Table 7]**

| Table 7 | | | | | | Example | | | | | |
|---|---|---|---|---|---|---|---|---|---|---|---|
| | | Substrate | Primer | Metallic base coat | Top clear coat | 7 | 8 | 9 | 10 | 11 | 12 |
| Evaluation results | Adhesiveness | Untreated PP plate | 1K | 1K | 2K | 8 | 8 | 10 | 10 | 10 | 10 |
| | | Untreated PP plate | 1K | 1K | 2K | 10 | 6 | 2 | 10 | 10 | 6 |
| | | Flame-treated PP plate | 1K | 1K | 2K | 10 | 6 | 2 | 10 | 10 | 8 |
| | | Untreated PP plate | 1K | 2K | 2K | 8 | 5 | 1 | 4 | 6 | 6 |
| | | Untreated PP plate | 2K | 1K | 2K | 8 | 5 | 1 | 4 | 6 | 6 |
| | Steam jet resistance | Untreated PP plate | 1K | 1K | 2K | 6 | 8 | 8 | 6 | 8 | 8 |
| | | Untreated PP plate | 1K | 1K | 2K | 8 | 10 | 6 | 2 | 8 | 10 |
| | | Flame-treated PP plate | 1K | 1K | 2K | 10 | 10 | 6 | 2 | 10 | 10 |
| | | Untreated PP plate | 1K | 2K | 2K | 5 | 8 | 4.8 | 1 | 1 | 4 |
| | | Untreated PP plate | 2K | 1K | 2K | 6 | 8 | 4.8 | 1 | 1 | 1 |

**[Table 8]**

| Table 8 | | | | | | Comparative Example | | | |
|---|---|---|---|---|---|---|---|---|---|
| | | Substrate | Primer | Metallic base coat | Top clear coat | 1 | 2 | 3 | 4 |
| Evaluation results | Adhesiveness | Untreated PP plate | 1K | 1K | 2K | 10 | 10 | 10 | 8 |
| | | Untreated PP plate | 1K | 1K | 2K | 2 | 0 | 2 | 4 |
| | | Flame-treated PP plate | 1K | 1K | 2K | 6 | 4 | 0 | 4 |
| | | Untreated PP plate | 1K | 2K | 2K | 0 | 0 | 0 | 0 |
| | | Untreated PP plate | 2K | 1K | 2K | 0 | 0 | 0 | 0 |
| | Steam jet resistance | Untreated PP plate | 1K | 1K | 2K | 8 | 2 | 8 | 6 |
| | | Untreated PP plate | 1K | 1K | 2K | 2 | 0 | 0 | 0 |
| | | Flame-treated PP plate | 1K | 1K | 2K | 10 | 2 | 0 | 2 |
| | | Untreated PP plate | 1K | 2K | 2K | 0 | 0 | 0 | 0 |
| | | Untreated PP plate | 2K | 1K | 2K | 0 | 0 | 0 | 0 |

**[Table 9]**

| Table 9 | | | | | | Comparative Example | | |
|---|---|---|---|---|---|---|---|---|
| | | Substrate | Primer | Metallic base coat | Top clear coat | 5 | 6 | 7 |
| Evaluation results | Adhesiveness | Untreated PP plate | 1K | 1K | 2K | 0 | 6 | 10 |
| | | Untreated PP plate | 1K | 1K | 2K | 0 | 4 | 4 |
| | | Flame-treated PP plate | 1K | 1K | 2K | 0 | 8 | 10 |
| | | Untreated PP plate | 1K | 2K | 2K | 0 | 3 | 2 |
| | | Untreated PP plate | 2K | 1K | 2K | 0 | 6 | 2 |
| | Steam jet resistance | Untreated PP plate | 1K | 1K | 2K | 8 | 4 | 8 |
| | | Untreated PP plate | 1K | 1K | 2K | 0 | 0 | 4 |
| | | Flame-treated PP plate | 1K | 1K | 2K | 0 | 4 | 10 |
| | | Untreated PP plate | 1K | 2K | 2K | 0 | 0 | 2 |
| | | Untreated PP plate | 2K | 1K | 2K | 0 | 3 | 2 |

It was observed that the cured coating films obtained from Examples 1 to 12, which are the resin compositions of the invention, were excellent in adhesiveness and steam jet resistance.

On the other hand, Comparative Examples 1 to 4 are examples in which the alkyd resin (C) was not contained, and poor capability was observed in adhesiveness and steam jet resistance. In particular, it was observed that the adhesiveness was insufficient when the substrate was the untreated PP plate and the primer or the metallic base coat was 2K.

Comparative Example 5 is an example in which the chlorinated polyolefin resin (A) was not contained, and poor capability was observed in adhesiveness and steam jet resistance. In particular, it was observed that the adhesiveness was insufficient when the substrate was the untreated PP plate and the primer or the metallic base coat was 2K.

Comparative Example 6 is an example in which the chlorinated polyolefin resin (A) was contained in an amount of more than 30% by mass, and poor capability was observed in adhesiveness and steam jet resistance. In particular, it was observed that the adhesiveness was insufficient when the substrate was the untreated PP plate and the primer or the metallic base coat was 2K.

Comparative Example 7 is an example in which the amount of the alkyl (meth)acrylate in the unsaturated monomer raw materials of the acryl resin (B) was less than 70% by mass, and poor capability was observed in adhesiveness and steam jet resistance. In particular, it was observed that the adhesiveness was insufficient when the substrate was the untreated PP plate and the primer or the metallic base coat was 2K.

## Claims

1. A resin composition comprising a chlorinated polyolefin resin (A), an acrylic resin (B), and an alkyd resin (C), wherein a content of the chlorinated polyolefin (A) is 1 to 30% by mass, a content of the acrylic resin (B) is 40 to 95% by mass, and a content of the alkyd resin (C) is 2 to 20% by mass in a solid content of the resin composition, and an amount of an alkyl (meth)acrylate in an unsaturated monomer raw material of the acrylic resin (B) is 70 to 100% by mass.

2. The resin composition according to claim 1, wherein the acrylic resin (B) has a solid hydroxyl value of 0 to 30 mgKOH/g.

3. The resin composition according to claim 1 or claim 2, wherein the chlorinated polyolefin resin (A) is a chlorinated polypropylene-α-olefin copolymer.

4. A coating material comprising the resin composition according to any one of claims 1 to 3.

5. A coated article comprising a substrate coated with the coating material according to claim 4.

6. The coated article according to claim 5, wherein surface free energy of the substrate is 30 mN/m or less.
